# EUROPÄISCHE PATENTSCHRIFT

(11) **EP 2 987 395 B1**
(45) Veröffentlichungstag und Bekanntmachung des Hinweises auf die Patenterteilung: **27.12.2017**
(21) Anmeldenummer: 15176057.6
(22) Anmeldetag: 09.07.2015
(51) Int. Cl.: A01C 7/04

(54) **DOSIERSCHEIBE EINES VERTEILAGGREGATS FÜR KÖRNIGES GUT**
DOSING DISC OF A DISTRIBUTION SYSTEM FOR GRANLUAR MATERIAL
DISQUE DE DOSAGE D'UN APPAREIL DE DISTRIBUTION POUR UN MATÉRIAU GRANULAIRE

(30) Priorität: 18.08.2014 DE 102014216370
(43) Veröffentlichungstag der Anmeldung: 24.02.2016
(73) Patentinhaber: Horsch Maschinen GmbH, 92421 Schwandorf (DE)
(72) Erfinder: Haselhoff, Alexander, 92421 Schwandorf (DE)
(74) Vertreter: Benninger, Johannes

(56) Entgegenhaltungen:
- WO-A1-2013/186175
- DE-A1- 3 831 042
- DE-T2- 69 502 564
- GB-A- 1 407 219
- US-A- 3 387 746
- US-A- 3 434 437
- US-A- 3 693 833
- US-A- 4 703 868

## Beschreibung

Die vorliegende Erfindung betrifft ein Dosieraggregat mit einer rotierenden Förderscheibe mit den Merkmalen der unabhängigen Ansprüche 1 und 7. Neben sog. Einzelkornsäaggregaten sind volumetrisch arbeitende Verteilvorrichtungen für körniges Gut bzw. Sävorrichtungen in zahlreichen Ausführungsvarianten bekannt. Hierbei kann die Kornförderung insbesondere mittels eines tragenden Luftstromes erfolgen. Die Zudosierung der Körner in den Luftstrom ermöglicht die Variation des Volumenstroms an ausgebrachten Körnern. Dennoch erfolgt die Kornablage an den Säscharen oftmals ungleichmäßig, da sowohl die Exaktheit der Korndosierung als auch die Regulierung des Luftstroms nur begrenzt beeinflussbar sind, was zu Nachteilen bei der Standraumzuteilung der einzelnen Pflanzen führen kann.

Eine für unterschiedliche Korngrößen und Samenarten universell einsetzbare Vorrichtung zum Vereinzeln und Abgeben von körnigem Gut ist aus der DE 36 33 955 A1 bekannt. Hierzu wird ein rotierender schmaler Hohlzylinder mit Zellen bildenden Aussparungen an seiner offenen Stirnseite, einer feststehenden äußeren Abdeckung und einem innerhalb des Hohlzylinders angeordneten Abdeckring vorgeschlagen. Ein Vorratsbehälter ist durch eine Wand vom Hohlzylinder abgetrennt, die eine Öffnung zum Durchtritt einer begrenzten Menge an zu vereinzelndem Gut aufweist. Eine Länge der die Zellen bildenden Aussparungen soll ein Zwei- oder Mehrfaches der Länge der zu vereinzelnden Körner betragen. Zudem ist nahe einer hinteren Begrenzungsfläche der Aussparungen eine Saugöffnung vorgesehen. Der schnell rotierende Hohlzylinder nimmt einige Körner je Aussparung aus dem Körnervorrat auf, wobei die äußere Abdeckung die Aussparungen in der Befüllzone abdeckt und verhindert, dass die Körner herausfallen. Die Fliehkraft drückt die Körner in die Aussparungen, während ein Bürstenabstreifer für das Abstreifen überschüssiger Körner sorgt, die in den Vorrat zurückfallen. Im weiteren Bewegungsverlauf des Hohlzylinders endet eine äußere Begrenzungswand, so dass nicht vom Saugdruck festgehaltene Körner in den Aussparungen durch Fliehkräfte nach außen abgegeben werden und in den Vorrat zurückgeleitet werden. Ein zusätzlicher pneumatischer Abstreifer kann diese Korneinzelung unterstützen. Am Abgabeort wird der Unterdruck abgeschnitten, so dass die Körner aus den Aussparungen durch Fliehkraft und Schwerkraft abgegeben werden.

Weiterhin offenbart die EP 0 636 306 A1 ein Verteilaggregat für körniges Gut wie Saatgut. Das Verteilaggregat umfasst ein Gehäuse mit kreisbahnförmiger Innenmantelfläche, einer Einlassöffnung für körniges Gut, einer im Gehäuse konzentrisch rotierenden Fördereinrichtung für das körnige Gut, sowie einer Auslassöffnung. Die Fördereinrichtung weist mehrere Öffnungen an ihrem Außenbereich auf, die in einem ersten Gehäusebereich mit der Gehäuseinnenmantelfläche eine Tasche bilden, in der die Körner gedrängt werden und durch Zentrifugalkräfte, unterstützt durch die Fördereinrichtung, kreisförmig befördert werden. In einen zweiten Gehäusebereich mündet die Einlassöffnung. Der erste Gehäusebereich und der zweite Gehäusebereich sind durch eine fest stehende, konturierte Scheibe getrennt. Die Kontur der Scheibe soll dafür sorgen, dass überschüssige Körner abgestreift werden, die in den Taschen der Fördereinrichtung transportiert werden. Diese Körner stehen einer erneuten Förderung zur Verfügung.

Bei den genannten Dosiereinrichtungen handelt es sich entweder um modifizierte Einzelkornsäaggregate, die zwar eine präzise Kornvereinzelung erlauben, die aber gegenüber volumetrisch dosierenden Drillmaschinen in ihrer Verarbeitungskapazität und in ihrem Kornvolumenstrom begrenzt sind und/oder in ihrem Aufbau und ihrer Funktion relativ aufwändig und störanfällig sind. Die bekannt gewordenen Zusatzgeräte, welche die regelmäßige Abgabe der Saatkörner bei volumetrisch dosierenden Maschinen verbessern sollen, reichen hingegen nicht an die Vereinzelungsqualität herkömmlicher Einzelkornsäaggregate heran.

Schließlich offenbart die WO 2013/186175 A1 ein Dosieraggregat gemäß dem Oberbegriff des Anspruchs 1 für körniges Gut, das insbesondere als Säaggregat in einer Sämaschine eingesetzt werden kann. Dieses bekannte Aggregat umfasst ein Gehäuse mit annähernd kreisbahn- und/oder kreissegmentförmiger Innenmantelfläche. Im Gehäuse rotiert konzentrisch eine scheibenförmige Fördereinrichtung für das beförderte körnige Gut bzw. die beförderten Samenkörner. Eine Auslassöffnung schließt sich annähernd tangential an die Innenmantelfläche des Gehäuses an. Die scheibenförmige Fördereinrichtung weist Öffnungen oder Absätze an ihrem Außenumfang auf, die im Zusammenhang mit der Rotation der Scheibe und dem Luftstrom für kreisförmige Bewegungen der Körner entlang der Innenmantelfläche sorgen. In einem Vereinzelungsbereich verbleibt durch eine angepasste Kontur der Innenmantelfläche des Gehäuses und unter Einfluss von Zentrifugalkräften nur noch jeweils ein einzelnes Korn in der Öffnung bzw. im Absatz der scheibenförmigen Fördereinrichtung, während überschüssige Körner abgesondert und zur erneuten Förderung in den ersten Gehäusebereich zurück geführt werden.

Das zuletzt genannte Säaggregat hat sich in der Praxis bewährt und ermöglicht eine präzise Kornvereinzelung bei volumetrischer Kornförderung, erfordert jedoch eine exakte Anpassung der umfangsseitigen Ausnehmungen oder Öffnungen der rotierenden Förderscheibe an die jeweils beförderten und auszusäenden Kornsorte. Bei relativ kleinen Körnern, die in zu groß dimensionierten Öffnungen befördert werden, ist eine exakte Vereinzelung nicht möglich, da in jeder Öffnung oftmals zwei, drei oder mehr Körner befördert und gleichzeitig durch die Auslassöffnung abgegeben werden. Sind dagegen die Öffnungen oder Ausnehmungen zu klein, versagt das Vereinzelungsaggregat völlig und gibt die Körner ebenso unregelmäßig ab, wie sie zuvor in die Einlassöffnung hineintransportiert wurden. Um diese Probleme zu vermeiden, ist es in der Praxis unumgänglich, die im Gehäuse rotierende Förderscheibe bei einem Wechsel des Saatgutes auszutauschen und gegen jeweils passende Scheiben auszuwechseln. Da eine vielreihige Sämaschine für jede Säschar ein separates Dosieraggregat der beschriebenen Bauart aufweist, sind entsprechend viele Sätze von auswechselbaren Dosierscheiben erforderlich, was nicht nur Kosten verursacht, sondern auch einen hohen Logistikaufwand beim jeweiligen Anwender erfordert. Die US 4 703 868 offenbart ein Dosieraggregat mit einer Förderscheibe mit Sauglöchern gemäß dem Oberbegriff des Anspruchs 7.

Ein vorrangiges Ziel der Erfindung besteht darin, diese Nachteile zu vermeiden und bei Dosieraggregaten der Bauart, wie sie in der WO 2013/186175 A1 oder in der US 4 703 868 beschrieben sind, eine einfach und kostengünstig realisierbare Anpassbarkeit der rotierenden Dosierscheiben an unterschiedliche Korngrößen und/oder -konturen zu ermöglichen. Insbesondere sollen die Dosieraggregate mit reduziertem logistischen Aufwand für unterschiedliche Kornarten, -größen und/oder -konturen hergerichtet und umgerüstet werden können, so dass beim Ausbringen unterschiedlicher Kornarten, -größen und/oder -konturen jeweils die bestmögliche Vereinzelungsqualität erreichbar ist. Damit soll weiterhin die erreichbare Abgabegenauigkeit und/oder die Kornabstände bei einer volumetrischen Kornförderung in einem Maße aufrechterhalten werden, dass sich damit die Korndosierung hinsichtlich ihrer Vereinzelungsqualität einer Einzelkorndosierung annähert oder diese im Idealfall erreicht, wobei gleichzeitig ein hoher Kornvolumenstrom ermöglicht sein soll, und dies vorzugsweise mit einem weiterhin einfachen und gegen Störungen wenig anfälligen Aufbau und einer einfachen Funktion, wie er/sie für volumetrisch dosierende Drillmaschinen charakteristisch ist.

Diese genannten Ziele der Erfindung werden mit dem Gegenstand der unabhängigen Ansprüche 1 und 7 erreicht. Merkmale vorteilhafter Weiterbildungen der Erfindung ergeben sich aus den abhängigen Ansprüchen. Zur Erreichung des genannten Ziels schlägt die Erfindung ein innerhalb eines Gehäuses eines Dosieraggregats für körniges Gut wie Samenkörner, Dünger o. dgl. und in etwa konzentrisch zu einer annähernd kreisbahn- und/oder kreissegmentförmigen Innenmantelfläche des Gehäuses rotierende Förderscheibe vor, die wenigstens einen Absatz oder eine Aussparung am Außenumfang oder an einer Stirnseite zur Aufnahme wenigstens eines zu separierendes Kornes über mindestens einen Umlauf der Förderscheibe aufweist. Diese Absätze oder Aussparungen können in ihrer Größe variiert werden, indem wechselbare Einsätze verwendet werden, die in die Förderscheibe eingesetzt und gegen Einsätze mit anderen Konturen und anders dimensionierten Absätzen oder Aussparungen ausgetauscht werden.

Bei dem Dosieraggregat selbst, in dem die erfindungsgemäße Förderscheibe rotiert, kann es sich insbesondere um ein Aggregat der Bauart handeln, wie es in der WO 2013/186175 A1 beschrieben ist. Die Erfindung liefert für solche Dosieraggregate eine einfache und kostengünstige Anpassung an unterschiedliche Korngrößen und/oder Kornkonturen. Insbesondere kann auf diese Weise das entsprechend damit ausgestattete Dosieraggregat mit stark reduziertem logistischen Aufwand für unterschiedliche Kornarten, -größen und/oder -konturen hergerichtet und umgerüstet werden, ohne dass jeweils die kompletten Förderscheiben ausgewechselt werden müssen. Die wechselbaren Einsätze in den montiert bleibenden Förderscheiben können beim Ausbringen unterschiedlicher Kornarten, -größen und/oder -konturen jeweils die bestmögliche Vereinzelungsqualität sicherstellen. Damit können zudem die jeweils realisierbare Abgabegenauigkeit und/oder die zu realisierenden Kornabstände bei einer volumetrischen Kornförderung in einem Maße aufrechterhalten werden, dass sich damit die Korndosierung hinsichtlich ihrer Vereinzelungsqualität einer Einzelkorndosierung annähert oder diese im Idealfall erreicht, wobei gleichzeitig ein hoher Kornvolumenstrom ermöglicht werden kann. Gleichzeitig werden damit Dosieraggregate zur Verfügung gestellt, die einfach aufgebaut und kaum gegen Störungen anfällig sind.

Das genannte und insbesondere aus der WO 2013/186175 A1 bekannte Dosieraggregat für körniges Gut wie Samenkörner, Dünger o. dgl. ist mit einem innerhalb eines Gehäuses des Dosieraggregats und in etwa konzentrisch zu einer annähernd kreisbahn- und/oder kreissegmentförmigen Innenmantelfläche des Gehäuses rotierenden Förderscheibe ausgestattet, die wenigstens einen Absatz oder eine Aussparung am Außenumfang oder im äußeren Bereich einer Stirnseite zur Aufnahme wenigstens eines zu separierendes Kornes über mindestens einen Umlauf der Förderscheibe aufweist. Der wenigstens eine Absatz oder die wenigstens eine Aussparung bildet in Zusammenwirkung mit einer nutförmigen Konturierung der Innenmantelfläche eine Fördertasche zur Förderung eines Korns oder mehrerer Körner in Richtung zu einer sich ungefähr tangential an die Innenmantelfläche anschließenden Auslassöffnung. Gemäß der Erfindung ist vorgesehen, dass sich der wenigstens eine Absatz oder die wenigstens eine Aussparung am Außenumfang bzw. stirnseitig an der Förderscheibe in einem lösbar in der Scheibe verankerten Einsatzelement befindet. Insbesondere kann vorgesehen sein, dass der wenigstens eine Absatz oder die wenigstens eine Aussparung im Wesentlichen durch das lösbar in der Scheibe verankerte Einsatzelement gebildet ist, das den Absatz oder die Aussparung sowie einen Umgebungsbereich um diesen Absatz oder diese Aussparung aufweist.

Die erfindungsgemäße Förderscheibe weist erfindungsgemäß wahlweise nur eine solche Einsatzaufnahme am Außenumfang bzw. stirnseitig oder auch zwei, drei, vier oder mehr gleichartige Einsatzaufnahmen zur lösbaren Verankerung jeweils gleichartiger oder unterschiedlich ausgestalteter Einsatzelemente auf. Hierbei ist insbesondere vorgesehen, dass zwei, drei oder mehr Einsatzaufnahmen zur lösbaren Verankerung jeweils eines Einsatzelementes gleichmäßig voneinander beabstandet über den Außenumfang der Förderscheibe verteilt angeordnet sind.

Auf diese Weise wird ein universeller Aufbau des Dosierorgans bzw. Dosieraggregats geschaffen, mit dem flexibel mit einem Wechselbauteil auf unterschiedliche Saatgutarten und Aussaatmengen reagiert bzw. das daran angepasst werden kann. So können die Wechseleinsätze in ihren Konturen und Größen an die jeweilige Saatgutart angepasst werden. Zudem kann mit den Einsätzen auch auf unterschiedliche Mengenanforderungen reagiert werden.

Bei der erfindungsgemäßen Förderscheibe sind die Einsatzelemente jeweils in den als Rastaufnahmen ausgebildeten Einsatzaufnahmen der Förderscheibe verrastbar, wodurch sie werkzeuglos ausgetauscht und durch jeweils andere Einsatzelemente ersetzt werden können.

Jede der Rastaufnahmen kann bspw. eine ungefähr rechteckförmige oder trapezförmige Kontur zur annähernd bündigen Aufnahme jeweils eines Einsatzelementes in der Förderscheibe aufweisen. Auch kann vorgesehen sein, dass jede der Rastaufnahmen Führungselemente mit einer in etwa radial oder ungefähr achsparallel zur Förderscheibe gerichtete Einschub- und Entnahmerichtung für das jeweils dort verrastbare Einsatzelement aufweist. Die dadurch geschaffenen Steckverbindungen für die werkzeuglos lösbaren und verrastbaren Einsatzelemente sichern zudem deren exakte Positionierung und verhindern eine fehlerhafte Montage.

Vorzugsweise kann zudem wenigstens eines der Einsatzelemente von zwei oder mehr über den Umfang der Förderscheibe verteilten Einsatzelementen als bündig mit der Förderscheibenkontur abschließendes Abdeckelement ohne Absatz oder Aussparung ausgebildet sein. Auf diese Weise kann bei der Förderscheibe die Anzahl der am Umfang vorgesehenen Aussparungen nach Bedarf reduziert werden. Somit sind nicht nur unterschiedliche Größen und/oder unterschiedliche Konturen der Aussparungen möglich, sondern es können auch sog. Blindtaschen eingesetzt werden. Der Einsatz sog. Blindtaschen kann insbesondere dann sinnvoll sein, wenn eine Reduzierung des Korndurchsatzes gewünscht ist, die jedoch mit einer entsprechenden Reduzierung der Umdrehungsgeschwindigkeit der Förderscheibe nicht zu realisieren ist, weil diese z.B. nicht zu langsam rotieren sollte, um nicht die Vereinzelungsqualität zu beeinträchtigen. Die Drehzahl der Scheibe kann auf diese Weise in einem günstigen Bereich gehalten werden, der für die möglichst gute Förder- und Vereinzelungsqualität der mit der Innenmantelfläche zusammenwirkenden Förderscheibe notwendig ist.

Eine Vielzahl von unterschiedlichen Einsatzelementen kann bspw. in einem entsprechend dafür vorbereiteten Aufbewahrungsbehälter wie einem Sortimentsbehälter aufbewahrt und für einen Wechselvorgang bereitgehalten werden. Hierbei kann es sinnvoll sein, mit optisch leicht erkennbaren Kodierungen an den unterschiedlich ausgestalteten Einsatzelementen zu arbeiten, um Verwechslungen bei deren Montage und Demontage zu vermeiden. Solche Kodierungen können bspw. durch Farbkodierungen, durch eingeprägte Symbole, Zahlen etc. gebildet sein, da die jeweiligen Größen und Passungen der Einsatzelemente selbst jeweils identisch sein müssen, um in die unveränderten und einheitlichen Einsatz- bzw. Rastaufnahmen der Förderscheibe zu passen.

Es wird darauf hingewiesen, dass mit der vorliegenden Erfindung gemäß den Ansprüchen 1-6 auf den Offenbarungsinhalt der WO 2013/186175 A1 Bezug genommen wird.

Mit der vorliegenden Erfindung gemäß den Ansprüchen 7 und 8 wird mit Bezug auf den Offenbarungsgehalt der US 4 703 868 weiterhin eine alternative Ausführungsvariante einer Förderscheibe offenbart, die innerhalb eines Gehäuses eines Dosieraggregats für körniges Gut wie Samenkörner, Dünger o. dgl. und in etwa konzentrisch zu einer annähernd kreisbahn- und/oder kreissegmentförmigen Innenmantelfläche des Gehäuses rotiert. Diese Variante der Förderscheibe weist in ihrem äußeren Bereich wenigstens ein unterdruckbeaufschlagtes Saugloch zur Aufnahme wenigstens eines zu separierendes Kornes über mindestens einen Umlauf der Förderscheibe auf. Zudem befindet sich das wenigstens eine Saugloch in einem lösbar in der Förderscheibe verankerten Einsatzelement. Dieses lösbar in der Förderscheibe verankerte Einsatzelement weist das Saugloch selbst sowie einen Umgebungsbereich um dieses Saugloch auf. Eine solche unterdruckbeaufschlagte Förderscheibe weist in aller Regel eine Mehrzahl oder Vielzahl von Löchern auf, an denen ein Unterdruck anliegt, so dass Samenkörner aus einem Vorrat, durch den die Scheibe bei ihrer Rotation hindurchstreicht, aufgenommen und angesaugt werden. An einem vorgesehenen Abgabeort werden die Körner dann von der Scheibe abgelöst, so dass sich eine Kornvereinzelung ergibt. Solche Vereinzelungseinrichtungen werden bspw. für Mais oder für pilliertes Saatgut verwendet. Auch hierbei kann sich die Notwendigkeit ergeben, vorhandene Förder- bzw. Lochscheiben für unterschiedliche Korngrößen und/oder Kornformen einzusetzen, ohne dass jeweils die Scheiben ausgetauscht werden sollen. Durch Verwendung von austauschbaren Einsätzen, die jeweils unterschiedlich dimensionierte und/oder geformte Ansauglöcher aufweisen, können die Scheiben jeweils für unterschiedliche Kornarten und/oder Korngrößen umgerüstet werden.

Weitere Aspekte einer solchen Lochscheibe mit austauschbaren Einsätzen finden sich zu den oben beschriebenen Ausführungsvarianten, die sich jeweils auf die Förderscheiben mit seitlichen oder randseitigen Aussparungen beziehen. Alle dort genannten zusätzlichen und/oder optionalen Aspekte oder Ausführungsvarianten beziehen sich gleichermaßen auf die hier als alternative Variante genannte unterdruckbeaufschlagte Lochscheibe oder Förderscheibe.

Die wenigstens eine Aussparung bzw. die Mehrzahl von Aussparungen befindet/befinden sich bei der erfindungsgemäßen Förderscheibe entweder an einer äußeren kreisrunden Kante der Förderscheibe und reichen damit sowohl in ihren flachzylindrischen, abgerundeten oder z.B. auch konisch abgeschrägten, relativ schmalen Umfangsbereich hinein als auch in den äußeren Bereich einer ihrer flachen Stirnseiten. Wenn deshalb im Zusammenhang der vorliegenden Anmeldung von Aussparungen die Rede ist, die sich am Außenumfang der Förderscheibe befinden, so kann bspw. diese beschriebene Anordnung gemeint sein. Ebenso umfasst ist mit dieser Definition jedoch eine Anordnung, bei der sich die auswechselbaren Aussparungen in der Stirnseite der flachen Förderscheibe befinden, ohne in den konischen, abgerundeten oder flachzylindrischen Außenumfang der Scheibe hineinzuragen. Außerdem umfasst diese Definition des Außenumfangs eine Anordnung, bei der sich die auswechselbaren Aussparungen hauptsächlich im konischen, abgerundeten oder flachzylindrischen Außenumfang der Förderscheibe befinden, so dass sie nicht oder nur in geringem Umfang in die flache Stirnseite der Förderscheibe hineinragen. In diesem Fall können die auswechselbaren Einsätze auch als eine Art Ringsegmente ausgestaltet sein bzw. bezeichnet werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine perspektivische Ansicht eines Dosieraggregats mit einer erfindungsgemäßen Förderscheibe.
Fig. 2 zeigt eine weitere Ansicht des Dosieraggregats.
Fig. 3 zeigt vier schematische Ansichten der Förderscheibe.
Fig. 4 zeigt eine perspektivische Ansicht einer Ausführungsvariante der Förderscheibe.
Fig. 5 zeigt eine perspektivische Ansicht einer weiteren Ausführungsvariante der Förderscheibe.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

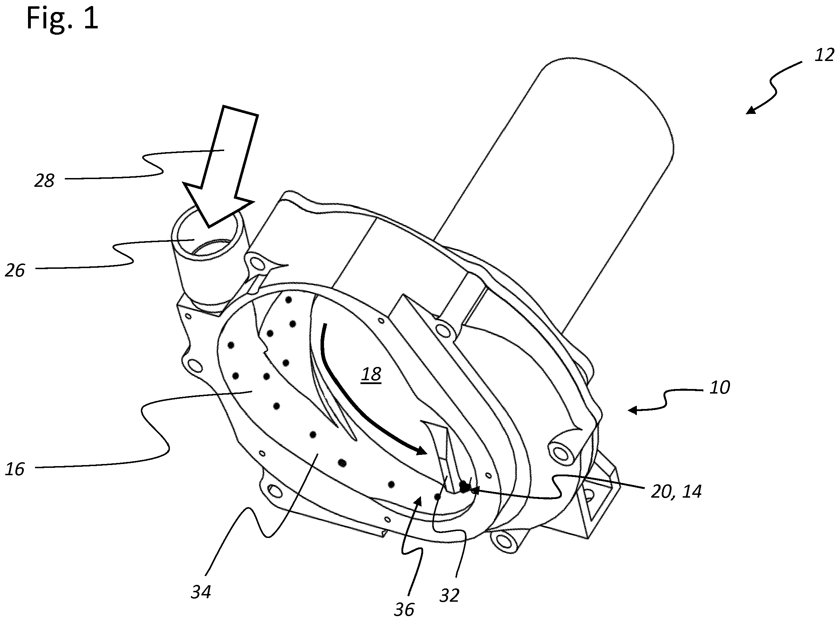

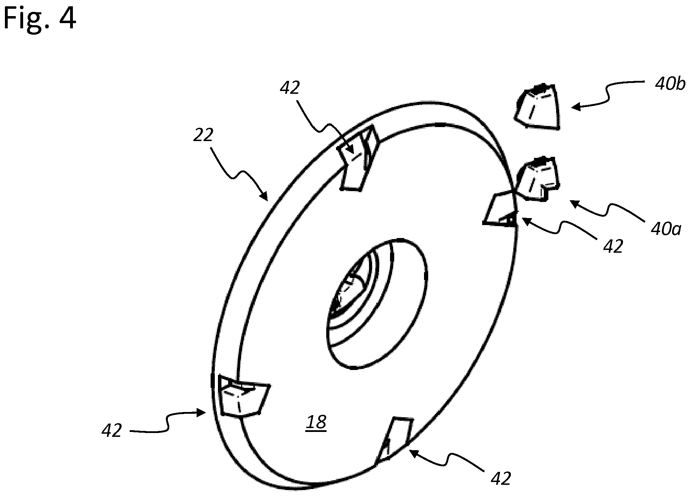

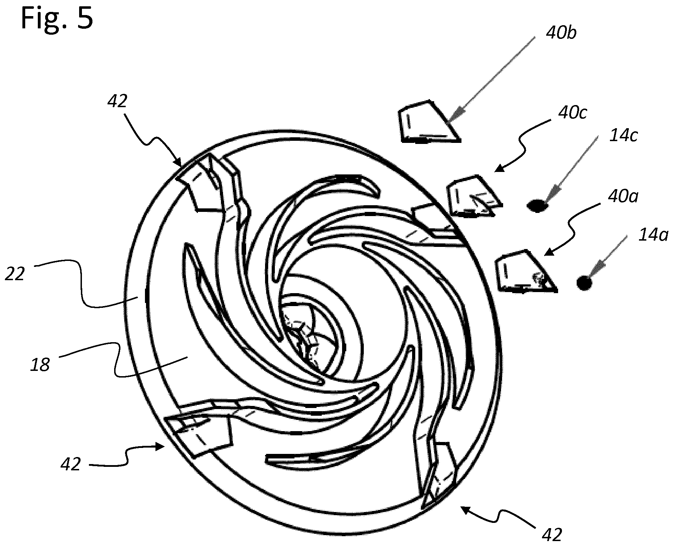

Die nachfolgend anhand der Figuren 1 bis 5 beschriebene Erfindung umfasst ein innerhalb eines Gehäuses 10 eines Dosieraggregats 12 für körniges Gut wie Samenkörner 14, Dünger o. dgl. und in etwa konzentrisch zu einer annähernd kreisbahn-und/oder kreissegmentförmigen Innenmantelfläche 16 des Gehäuses 10 rotierende Förderscheibe 18 vor, die wenigstens einen Absatz oder eine Aussparung 20 am Außenumfang 22 zur Aufnahme wenigstens eines zu separierendes Kornes 14 über mindestens einen Umlauf der Förderscheibe 18 aufweist. Diese Absätze oder Aussparungen 20 können gemäß Fig. 4 und Fig. 5 in ihrer Größe variiert werden, indem wechselbare Einsatzelemente 40 verwendet werden, die in die Förderscheibe 18 eingesetzt und
gegen Einsatzelemente 40 mit anderen Konturen und anders dimensionierten Absätzen oder Aussparungen 20 ausgetauscht werden.

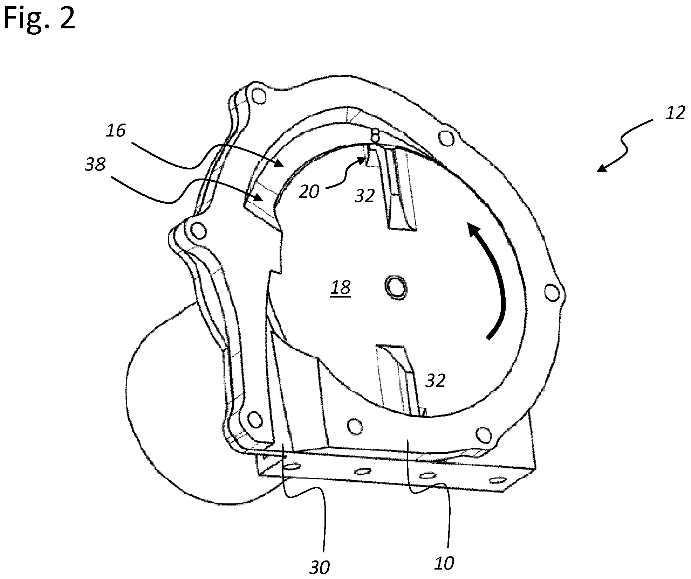

Bei dem Dosieraggregat 12 selbst, in dem die erfindungsgemäße Förderscheibe 18 rotiert, kann es sich insbesondere um ein Aggregat der Bauart handeln, wie es in der WO 2013/186175 A1 beschrieben ist. Die schematische Perspektivansicht der Fig. 1 verdeutlicht den Aufbau eines solchen Dosieraggregats 12, das insbesondere als Säaggregat einer Verteil- oder Sämaschine dienen kann. Das Dosieraggregat 12 umfasst ein Gehäuse 10 mit einer zumindest abschnittsweise annähernd kreisbahn- und/oder kreissegmentförmigen Innenmantelfläche 16 und einer Einlassöffnung 26 für eine Luftströmung 28 und darin befördertem körnigen Gut oder beförderten Samenkörnern 14. Weiterhin umfasst das Dosieraggregat 12 die im Gehäuse 10 konzentrisch rotierende Förderscheibe 18 für das in der Luftströmung 28 getragene körnige Gut bzw. die darin beförderten Samenkörner sowie eine in der Fig. 1 nicht deutlich erkennbare Auslassöffnung 30 (vgl. Fig. 2), die annähernd tangential an die Innenmantelfläche 16 anschließt und die Samenkörner bzw. das körnige Gut weitgehend regelmäßig zu einer Saatleitung, einer Förderleitung o. dgl. abgibt. Im dargestellten Ausführungsbeispiel weist die Förderscheibe 18 eine, zwei (vgl. Fig. 2) oder mehrere (vgl. Fig. 4, Fig. 5) regelmäßig voneinander beabstandete Mitnehmerstufen 32 sowie unmittelbar daran angeordnete Aussparungen 20 zur Mitnahme von körnigem Gut bzw. von Samenkörnern auf.

Die im Luftstrom 28 getragenen Körner werden durch den gebogenen Einlauf der Einlassöffnung 26 in den Innenraum des Gehäuses 10 geführt, in dem die rotierende Förderscheibe 18 eine Art Dosiereinrichtung zur äquidistanten Abgabe der Körner in Richtung zum und aus dem Auslass 30 bilden. Die Luftströmung 28 sorgt dafür, dass sich die Körner entlang der Innenmantelfläche 16 und zunächst entlang der gekrümmten Wandfläche 34 bewegen. Da die Innenmantelfläche 16 im weiteren Verlauf in Richtung der Auslassöffnung 30 eine geneigte Gehäusefläche 36 oder eine anderweitig geformte nutförmige Struktur aufweist, deren Abmessungen ungefähr mit der Größe der einzelnen Körner korrespondieren kann, werden die Körner im weiteren Bewegungsverlauf zwischen der Wandfläche 34, entlang der geneigten Gehäusefläche 36 und in Richtung der Auslassöffnung 30 zur Förderscheibe 18 gedrängt, wo jedoch zwischen der Stufe 32 und der geneigten Gehäusefläche 36 jeweils nur ein einzelnes Korn 14 Platz findet. Dies wird auch dadurch erreicht, dass sich die nutförmige Struktur oder geneigte Gehäusefläche 36 in Umdrehungsrichtung der Förderscheibe 18 in Richtung zur Auslassöffnung 30 verjüngt. Da zudem die nutförmige Verjüngung der Innenmantelfläche 16 in Umdrehungsrichtung der Förderscheibe 18 tangential in der Auslassöffnung 30 mündet, werden jeweils einzelne Körner 14 in gleichmäßigen Abständen durch die Auslassöffnung 30 abgegeben.

Die schematische Perspektivansicht der Fig. 2 zeigt einen Teil der Gehäusekontur eines Dosieraggregats 12 mit der darin rotierenden Förderscheibe 18, die im gezeigten Ausführungsbeispiel mit zwei sich gegenüberliegenden Mitnehmerstufen 32 und diesen jeweils zugeordneten Aussparungen 20 ausgestattet ist. Wie anhand der Figuren 4 und 5 näher anhand eines Ausführungsbeispiels erläutert, sind zumindest die Aussparungen 20 in ihrer Größe veränderlich, was durch auswechselbare Einsatzelemente erreicht wird, die in die Förderscheibe 18 eingesetzt und werkzeuglos entnommen werden können. Die Fig. 2 verdeutlich die sich aufweitende Innenmantelfläche 16, die in Zusammenwirkung mit den Aussparungen 20 und den Mitnehmerstufen 32 eine gezielte Kornführung erlaubt und dafür sorgt, dass bei jedem Passieren einer der Aussparungen 20 am Auslass 30 jeweils immer genau ein Korn 14 abgegeben wird, während die Rampe 38 dafür sorgt, dass überzählige Körner, die von der Mitnehmerstufe 32 mitgetragen werden, im Gehäuse 10 verbleiben und ggf. mehrfach umgewälzt werden.

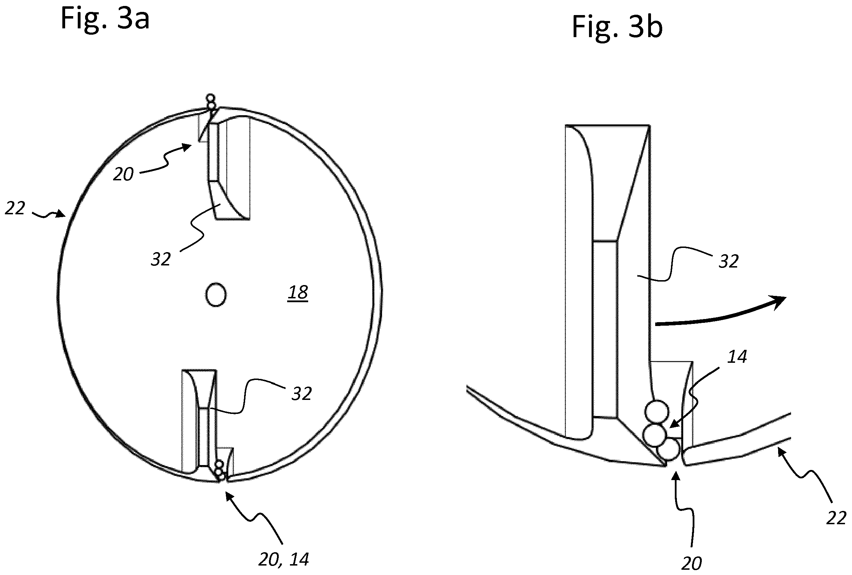

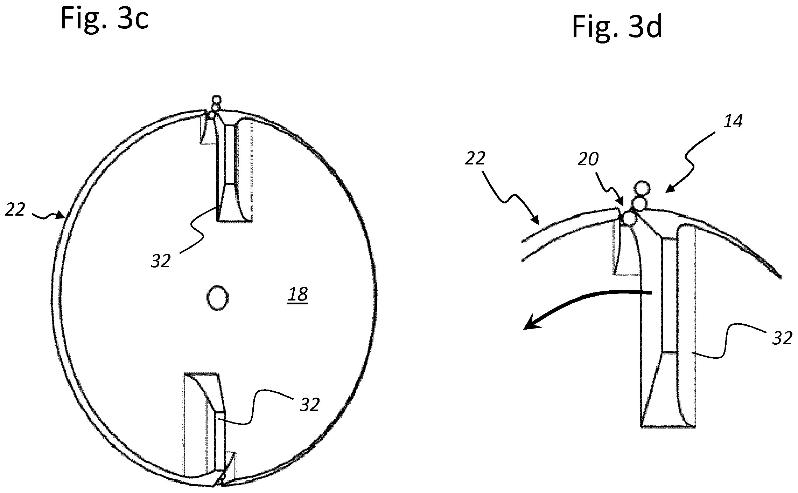

Die Perspektivansicht der Fig. 3a und die Detaildarstellung der Fig. 3b zeigen eine Ausführungsvariante der Förderscheibe 18 und der darauf aufgesetzten Mitnehmerstufen 32, die hier mit Vertiefungen bzw. rechteckförmigen Aussparungen 20 kombiniert sind, die unmittelbar an eine Stufe 32 angrenzend am Außenumfang 22 der Förderscheibe 18 angeordnet und so dimensioniert sind, dass in den Nuten bzw. Aussparungen 20 jeweils ein Korn 14 Platz findet (vgl. Fig. 3b), während weitere Körner 14 zwar von den Mitnehmerstufen 32 befördert, jedoch im weiteren rotierenden Förderverlauf der Förderscheibe 18 auf die Rampe 38 (vgl. Fig. 2) abgedrängt und in den Sammelvorrat im Gehäuse 10 zurück befördert werden. Wie auch die Figuren 3c und 3d verdeutlichen, wird diese Methode der Kornvereinzelung durch die Zentrifugalkräfte der schnell rotierenden Förderscheibe 18 unterstützt, die in Zusammenwirkung mit der Gestaltung der Innenmantelfläche 16 des Gehäuses 10 dafür sorgen, dass nur das einzelne in der Nut bzw. Aussparung 20 befindliche Korn 14 weiter zum Auslass 30 befördert wird.

Es sei darauf hingewiesen, dass die Aussparungen 20, wie sie in den Figuren 1 bis 3 beispielhaft verdeutlicht sind, jeweils an die Dimensionen und/oder Konturen der zu vereinzelnden Körner 14 angepasst werden können, wie dies anhand der Figuren 4 und 5 gezeigt ist, wo die Aussparungen 20 mittels auswechselbarer Einsätze in ihrer Größe und/oder Kontur geändert werden können. Wahlweise betrifft dies auch die Mitnehmerstufen 32, die ggf. auch Teil der wechselbaren Einsätze sein können.

Die Aussparungen 20 können in ihrer Größe und/oder in ihrer Kontur variiert werden, indem wechselbare Einsätze verwendet werden, die in die Förderscheibe 18 eingesetzt und gegen Einsätze mit anderen Konturen und anders dimensionierten Absätzen oder Aussparungen 20 ausgetauscht werden. Die wenigstens eine Aussparung 20 bildet in Zusammenwirkung mit der nutförmigen Konturierung der Innenmantelfläche 16 des Gehäuses eine Fördertasche zur Förderung jeweils eines Korns 14 in Richtung zu der sich ungefähr tangential an die Innenmantelfläche 16 anschließenden Auslassöffnung 30. Gemäß der Erfindung befindet sich die wenigstens eine Aussparung 20 am Außenumfang 22 bzw. stirnseitig an der Förderscheibe 18 in einem lösbar in der Scheibe 18 verankerten Einsatzelement 40. Wie anhand der Figuren 4 und 5 verdeutlicht, ist die wenigstens eine Aussparung 20 im Wesentlichen durch das lösbar in der Scheibe 18 verankerte Einsatzelement 40 gebildet, das den Absatz oder die Aussparung 20 sowie einen Umgebungsbereich um diese Aussparung 20 aufweist. Die Aussparung 20 bzw. die Mehrzahl von Aussparungen befindet/befinden sich im gezeigten Ausführungsbeispiel (vgl. Fig. 4 und Fig. 5) an einer äußeren kreisrunden Kante der Förderscheibe 18 und reichen damit sowohl in ihren konisch abgeschrägten, relativ schmalen Umfangsbereich hinein als auch in den äußeren Bereich einer ihrer flachen Stirnseiten. Wenn deshalb im Zusammenhang der vorliegenden Anmeldung von Aussparungen 20 die Rede ist, die sich am Außenumfang der Förderscheibe 18 befinden, so kann bspw. eine solche Anordnung gemeint sein. Ebenso umfasst ist mit dieser Definition jedoch eine Anordnung, bei der sich die auswechselbaren Aussparungen 20 in der Stirnseite der flachen Scheibe 18 befinden, ohne in den konischen oder flachzylindrischen Außenumfang der Scheibe 18 hineinzuragen. Außerdem umfasst diese Definition des Außenumfangs eine Anordnung, bei der sich die auswechselbaren Aussparungen 20 hauptsächlich im konischen oder flachzylindrischen Außenumfang der Scheibe 18 befinden, so dass sie nicht oder nur in geringem Umfang in die flache Stirnseite der Förderscheibe 18 hineinragen. In diesem Fall können die auswechselbaren Einsätze 42 auch als eine Art Ringsegmente ausgestaltet sein bzw. bezeichnet werden.

Die Förderscheibe 18 weist erfindungsgemäß wahlweise nur eine Einsatzaufnahme 42 am Außenumfang 22 und/oder in der Stirnseite oder auch zwei, drei, vier oder mehr gleichartige Einsatzaufnahmen 42 zur lösbaren Verankerung jeweils gleichartiger oder unterschiedlich ausgestalteter Einsatzelemente 40 auf. Die Ausführungsvarianten der Fig. 4 zeigt eine glattflächige Förderscheibe 18 mit konisch abgeschrägtem Rand am Außenumfang 22 und vier Einsatzaufnahmen 42, die sich jeweils paarweise gegenüber liegen und die jeweils in Segmentwinkeln von 90 Grad voneinander beabstandet sind.

Die Einsatzelemente 40 können als Wechseleinsätze in ihren Konturen und Größen an die jeweilige Saatgutart angepasst werden. Zudem kann mit den Einsätzen auch auf unterschiedliche Mengenanforderungen reagiert werden. Erfindungsgemäß sind die Einsatzelemente 40 jeweils in den als Rastaufnahmen ausgebildeten Einsatzaufnahmen 42 der Förderscheibe 18 verrastbar, wodurch sie werkzeuglos ausgetauscht und durch jeweils andere Einsatzelemente 40 ersetzt werden können.

Die Variante der Fig. 4 verdeutlich ein erstes Einsatzelement 40a, das mit einer Aufnahme 20 definierter Größe ausgestattet ist, sowie ein zweites Einsatzelement 40b, das keine Aufnahme aufweist, sondern als sog. Blindelement ausgebildet ist, mit dem kein Korn transportiert wird. Werden bspw. bei einer solchen Förderscheibe 18 mit insgesamt vier Einsatzaufnahmen 42 jeweils zwei solche Blindelemente 40b eingesetzt, so sind nur noch zwei aktive Aufnahmen 20 vorhanden, wie dies in den Figuren 3a und 3c bereits gezeigt wurde.

Jede der als Rastaufnahmen ausgebildeten Einsatzaufnahmen 42 kann bspw. eine ungefähr rechteckförmige oder trapezförmige Kontur zur annähernd bündigen Aufnahme jeweils eines Einsatzelementes 40, 40a, 40b in der Förderscheibe 18 aufweisen. Auch kann vorgesehen sein, dass jede der Rastaufnahmen 42 Führungselemente mit einer in etwa radial oder ungefähr achsparallel zur Förderscheibe 18 gerichtete Einschub- und Entnahmerichtung für das jeweils dort verrastbare Einsatzelement 40 aufweist. Die dadurch geschaffenen Steckverbindungen für die werkzeuglos lösbaren und verrastbaren Einsatzelemente 40 sichern zudem deren exakte Positionierung und verhindern eine fehlerhafte Montage.

Die Darstellung der Fig. 5 zeigt nochmals verschiedene Einsatzelemente 40a, 40b und 40c, wobei das erste Einsatzelement 40a mit einer kleinen Aufnahme für kleinere, runde Saatkörner 14a geeignet ist. Das zweite Einsatzelement 40b weist keine Aufnahme auf und ist als Blindelement ausgebildet, während das dritte Einsatzelement 40c eine größere Aufnahme für linsenförmige, etwas größere bzw. länglichere Körner 14c aufweist. Auf der Stirnseite der Förderscheibe 18 können Fächerstege o. dgl. angeordnet sein, die endseitig in die Mitnehmerstufen 32 am hinteren Rand der Aufnahmen 20 übergehen, wie dies in Fig. 5 gezeigt ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Gehäuse
12 Dosieraggregat
14 Korn, Saatkorn
16 Innenmantelfläche
18 Förderscheibe
20 Aussparung
22 Außenumfang
26 Einlassöffnung
28 Luftströmung
30 Auslassöffnung
32 Mitnehmerstufe
34 Wandfläche
36 geneigte Gehäusefläche
38 Rampe
40 Einsatzelement
42 Einsatzaufnahme

## Patentansprüche

1. Dosieraggregat (12) für körniges Gut wie Samenkörner (14), Dünger o. dgl. mit einem Gehäuse (10), wobei innerhalb des Gehäuses (10) und in etwa konzentrisch zu einer annähernd kreisbahn- und/oder kreissegmentförmigen Innenmantelfläche (16) des Gehäuses (10) eine rotierende Förderscheibe (18) vorgesehen ist, die wenigstens einen Absatz oder eine Aussparung (20) am Außenumfang (22) oder an einer Stirnseite zur Aufnahme wenigstens eines zu separierendes Kornes (14) über mindestens einen Umlauf der Förderscheibe (18) aufweist, wobei der wenigstens eine Absatz oder die wenigstens eine Aussparung (20) in Zusammenwirkung mit einer nutförmigen Konturierung der Innenmantelfläche (16) eine Fördertasche zur Förderung eines Korns (14) oder mehrerer Körner (14) in Richtung zu einer sich ungefähr tangential an die Innenmantelfläche (16) anschließenden Auslassöffnung (30) bildet, **dadurch gekennzeichnet, dass** sich der wenigstens eine Absatz oder die wenigstens eine Aussparung (20) am Außenumfang (22) oder an der Stirnseite der Förderscheibe (18) in einem lösbar in der Scheibe (18) verankerten Einsatzelement (40) befindet, wobei die Förderscheibe (18) eine, zwei, drei, vier oder mehr gleichartige Einsatzaufnahmen (42) zur lösbaren Verankerung jeweils gleichartiger oder unterschiedlich ausgestalteter Einsatzelemente (40) aufweist, wobei die Einsatzelemente (40) jeweils in den als Rastaufnahmen ausgebildeten Einsatzaufnahmen (42) der Förderscheibe (18) verrastbar sind.

2. Dosieraggregat nach Anspruch 1, bei der der wenigstens eine Absatz oder die wenigstens eine Aussparung (20) durch das lösbar in der Scheibe (18) verankerte Einsatzelement (40) gebildet ist, das den Absatz oder die Aussparung (20) sowie einen Umgebungsbereich um diesen Absatz oder diese Aussparung (20) aufweist.

3. Dosieraggregat nach Anspruch 1, bei der zwei, drei oder mehr Einsatzaufnahmen (42) zur lösbaren Verankerung jeweils eines Einsatzelementes (40) gleichmäßig voneinander beabstandet über den Außenumfang (22) oder die Stirnseite der Förderscheibe (18) verteilt angeordnet sind.

4. Dosieraggregat nach Anspruch 1, bei der jede der Rastaufnahmen eine ungefähr rechteckförmige oder trapezförmige Kontur zur annähernd bündigen Aufnahme jeweils eines Einsatzelementes (40) in der Förderscheibe (18) aufweist.

5. Dosieraggregat nach Anspruch 1 oder 4, bei der jede der Rastaufnahmen Führungselemente mit einer in etwa radial oder ungefähr achsparallel zur Förderscheibe (18) gerichtete Einschub- und Entnahmerichtung für das jeweils dort verrastbare Einsatzelement (40) aufweist.

6. Dosieraggregat nach einem der Ansprüche 1 bis 5, bei der wenigstens eines der Einsatzelemente (40) von zwei oder mehr über den Umfang der Förderscheibe (18) verteilten Einsatzelementen (40) als bündig mit der Förderscheibenkontur abschließendes Abdeckelement ohne Absatz oder Aussparung ausgebildet ist.

7. Dosieraggregat (12) für körniges Gut wie Samenkörner (14), Dünger o. dgl. mit einem Gehäuse (10), wobei innerhalb des Gehäuses (10) und in etwa konzentrisch zu einer annähernd kreisbahn- und/oder kreissegmentförmigen Innenmantelfläche (16) des Gehäuses (10) eine rotierende Förderscheibe (18) vorgesehen ist, wobei die Förderscheibe (18) in ihrem äußeren Bereich wenigstens ein unterdruckbeaufschlagtes Saugloch zur Aufnahme wenigstens eines zu separierendes Kornes (14) über mindestens einen Umlauf der Förderscheibe (18) aufweist, und wobei sich das wenigstens eine Saugloch in einem lösbar in der Förderscheibe (18) verankerten Einsatzelement (40) befindet, **dadurch gekennzeichnet, dass** die Förderscheibe (18) eine, zwei, drei, vier oder mehr gleichartige Einsatzaufnahmen (42) zur lösbaren Verankerung jeweils gleichartiger oder unterschiedlich ausgestalteter Einsatzelemente (40) aufweist, wobei die Einsatzelemente (40) jeweils in den als Rastaufnahmen ausgebildeten Einsatzaufnahmen (42) der Förderscheibe (18) verrastbar sind.

8. Dosieraggregat nach Anspruch 7, bei der das lösbar in der Förderscheibe (18) verankerte Einsatzelement (40) das Saugloch sowie einen Umgebungsbereich um dieses Saugloch aufweist.

## Claims

1. A metering unit (12) for granular material such as seeds (14), fertiliser, or the like, with a housing (10), wherein, provided within the housing (10), is a conveyor disk (18) rotating approximately concentrically to an inner shell surface (16) of the housing (10), with the inner shell surface (16) taking approximately the form of a circular path and/or of a circle segment, which conveyor disk (18) has at least one shoulder or one recess (20) at its outer circumference (22) or at a front end for receiving at least one grain (14) to be separated via at least one revolution of the conveyor disk (18); wherein, in interaction with a groove-shaped profile of the inner shell surface (16), the at least one shoulder or the at least one recess (20) forms a conveyor pocket for conveying one grain (14) or a plurality of grains (14) toward an outlet opening (30) abutting approximately tangentially on the inner shell surface (16); **characterised in that** the at least one shoulder or the at least one recess (20) is located at the outer circumference (22) or at the front end of the conveyor disk (18) in an insert element (40) that is detachably anchored in the disk (18), wherein the conveyor disk (18) has one, two, three, four, or more alike insert receptions (42) for the detachable anchoring of in each case alike or differently designed insert elements (40); wherein the insert elements (40) are in each case lockable in the insert receptions (42) of the conveyor disk (18), with the insert receptions (42) being designed as snap-in receptions.

2. The metering unit as recited in claim 1, with the at least one shoulder or the at least one recess (20) being formed by the insert element (40) that is detachably anchored in the disk (18), which insert element (40) accommodates the shoulder or the recess (20) as well as an area surrounding this shoulder or this recess (20).

3. The metering unit as recited in claim 1, with two, three, or more insert receptions (42) for the detachable anchoring of in each case one insert element (40) being evenly spaced apart and disposed distributed over the outer circumference (22) or the front end of the conveyor disk (18).

4. The metering unit as recited in claim 1, with each of the snap-in receptions having an approximately rectangular or trapezoidal contour for the approximately flush reception of in each case one insert element (40) in the conveyor disk (18).

5. The metering unit as recited in claim 1 or 4, with each of the snap-in receptions having guide elements for the particular insert element (40) lockable there, which guide elements have an insertion direction and a removal direction that is directed approximately radial or approximately axially parallel in relation to the conveyor disk (18).

6. The metering unit as recited in one of the claims 1 to 5, with at least one of the insert elements (40) being formed by two or more insert elements (40) that are distributed over the circumference of the conveyor disk (18) as cover element fitting flush with the conveyor disk contour without shoulder or recess.

7. A metering unit (12) for granular material such as seeds (14), fertiliser, or the like, with a housing (10), wherein a conveyor disk (18) is provided within the housing (10), the conveyor disk (18) rotating approximately concentrically to an inner shell surface (16) of the housing (10), with the inner shell surface (16) taking approximately the form of a circular path and/or of a circle segment; wherein the conveyor disk (18) has at least one negatively pressurised suction hole in its outer area for the reception of at least one grain (14) to be separated via at least one revolution of the conveyor disk (18); and wherein the at least one suction hole is located in an insert element (40) that is detachably anchored in the conveyor disk (18); **characterised in that** the conveyor disk (18) has one, two, three, four, or more alike insert receptions (42) for the detachable anchoring of in each case alike or differently designed insert elements (40); wherein the insert elements (40) are in each case lockable in the insert receptions (42) of the conveyor disk (18), with the insert receptions (42) being designed as snap-in receptions.

8. The metering unit as recited in claim 7, with the insert element (40) that is detachably anchored in the conveyor disk (18) accommodating the suction hole as well as an area surrounding said suction hole.

## Revendications

1. Groupe de dosage (12) pour matières granulaires telles que graines (14), engrais ou similaires, comprenant un carter (10), dans lequel un disque transporteur (18) tournant est prévu à l'intérieur dudit carter (10) et à peu près concentrique par rapport à une surface latérale intérieure (16) du carter (10), qui est approximativement en forme de trajectoire circulaire et/ou de segment de cercle, disque transporteur (18) qui présente au moins un gradin ou un évidement (20) sur la circonférence extérieure (22) ou sur une face frontale pour recevoir au moins un grain à séparer (14) sur au moins une rotation du disque transporteur (18), dans lequel ledit au moins un gradin ou ledit au moins un évidement (20) forme, en coopération avec un contour en forme de rainure de la surface latérale intérieure (16), une poche de transport pour transporter un grain (14) ou une pluralité de grains (14) en direction d'une ouverture de sortie (30) qui est contiguë de manière à peu près tangentielle à ladite surface latérale intérieure (16), **caractérisé par le fait que** ledit au moins un gradin ou ledit au moins un évidement (20) sur la circonférence extérieure (22) ou sur la face frontale du disque transporteur (18) se trouve dans un élément formant insert (40) ancré de manière amovible dans le disque (18), dans lequel le disque transporteur (18) présente un, deux, trois, quatre logement(s) d'insert similaires (42) ou plus, pour l'ancrage amovible d'éléments formant insert (40) respectivement similaires ou de configuration différente, dans lequel les éléments formant insert (40) peuvent être encliquetés chacun dans les logements d'insert (42) du disque transporteur (18) qui sont réalisés en tant que logements à encliquetage.

2. Groupe de dosage selon la revendication 1, dans lequel ledit au moins un gradin ou ledit au moins un évidement (20) est formé par ledit élément formant insert (40) ancré de manière amovible dans le disque (18), qui présente ledit gradin ou ledit évidement (20) ainsi qu'une zone environnante autour de ce gradin ou de cet évidement (20).

3. Groupe de dosage selon la revendication 1, dans lequel deux, trois logements d'insert (42) ou plus, pour l'ancrage amovible de respectivement un élément formant insert (40), sont répartis sur la circonférence extérieure (22) ou la face frontale du disque transporteur (18) de manière à être espacés régulièrement les uns des autres.

4. Groupe de dosage selon la revendication 1, dans lequel chacun des logements à encliquetage présente un contour à peu près rectangulaire ou trapézoïdal pour recevoir approximativement à fleur respectivement un élément formant insert (40) dans le disque transporteur (18).

5. Groupe de dosage selon la revendication 1 ou 4, dans lequel chacun des logements à encliquetage présente des éléments de guidage avec une direction d'insertion ou de rétraction dirigée à peu près radialement ou environ axialement parallèle par rapport au disque transporteur (18), pour l'élément formant insert (40) y encliquetable respectivement.

6. Groupe de dosage selon l'une quelconque des revendications 1 à 5, dans lequel l'un au moins des éléments formant insert (40) de deux ou plusieurs éléments formant insert (40) répartis sur la circonférence du disque transporteur (18) est réalisé en tant qu'élément de recouvrement exempt de gradin ou d'évidement, qui affleure par rapport au contour du disque transporteur.

7. Groupe de dosage (12) pour matières granulaires telles que graines (14), engrais ou similaires, comprenant un carter (10), dans lequel un disque transporteur (18) tournant est prévu à l'intérieur dudit carter (10) et à peu près concentrique par rapport à une surface latérale intérieure (16) du carter (10), qui est approximativement en forme de trajectoire circulaire et/ou de segment de cercle, dans lequel ledit disque transporteur (18) présente dans sa zone extérieure au moins un trou d'aspiration soumis à dépression qui est destiné à recevoir au moins un grain à séparer (14) sur au moins une rotation du disque transporteur (18), et dans lequel ledit au moins un trou d'aspiration est situé dans un élément formant insert (40) ancré de manière amovible dans le disque transporteur (18), **caractérisé par le fait que** ledit disque transporteur (18) présente un, deux, trois, quatre logement(s) d'insert similaires (40) ou plus, pour l'ancrage amovible d'éléments formant insert (40) respectivement similaires ou de configuration différente, dans lequel les éléments formant insert (40) peuvent être encliquetés chacun dans les logements d'insert (42) du disque transporteur (18) qui sont réalisés en tant que logements à encliquetage.

8. Groupe de dosage selon la revendication 7, dans lequel l'élément formant insert (40) ancré de manière amovible dans le disque transporteur (18) présente ledit trou d'aspiration ainsi qu'une zone environnante autour de ce trou d'aspiration.
